# EUROPÄISCHE PATENTSCHRIFT

(11) **EP 4 371 397 B1**
(45) Veröffentlichungstag und Bekanntmachung des Hinweises auf die Patenterteilung: **07.10.2026**
(21) Anmeldenummer: 23206448.5
(22) Anmeldetag: 27.10.2023
(51) Int. Cl.: A01D 89/00

(54) **SCHWADAUFNEHMER MIT NIEDERHALTERN**
WINDROW PICK-UP WITH WINDGUARDS
RAMASSEUR AVEC PINCES DE RETENUE

(30) Priorität: 21.11.2022 DE 102022130747
(43) Veröffentlichungstag der Anmeldung: 22.05.2024
(73) Patentinhaber: Deere & Company, Moline, IL 61265 (US)
(72) Erfinder: RATHMER, Mike, 68163 Mannheim (DE)
(74) Vertreter: Holst, Sönke

(56) Entgegenhaltungen:
- EP-A1- 1 252 814
- EP-A1- 1 790 206
- EP-A1- 2 674 023
- EP-A1- 4 066 624
- DE-A1- 102012 011 591

## Beschreibung

Die Erfindung betrifft einen Schwadaufnehmer nach dem Oberbegriff des Anspruchs 1 sowie eine damit ausgestattete Erntemaschine.

### Stand der Technik

Schwadaufnehmer werden in der Landwirtschaft verwendet, um auf einem Feld liegendes Gut, das in der Regel zuvor getrocknet und in einem Schwad abgelegt wurde, aufzunehmen und einer Erntemaschine zuzuführen, in der es zu einem Ballen gepresst (Ballenpresse), - ggf. nach einem Schneidvorgang - zum Abtransport abgelegt (Ladewagen), gehäckselt (Feldhäcksler) oder ausgedroschen (Mähdrescher) wird. Derartige Schwadaufnehmer umfassen üblicherweise eine Aufsammeltrommel mit an sich quer zur Vorwärtsrichtung erstreckenden Zinkenträgern angebrachte Zinken. Die Zinkenträger werden in Bewegung versetzt, indem ein sie abstützender Halter in Rotation versetzt wird. Die Zinken erstrecken sich durch Zwischenräume, die zwischen am Rahmen des Schwadaufnehmers angebrachten Abstreifern verbleiben, nach außen und bewegen sich entlang dieser Zwischenräume. Die Zinkenträger können durch Kurven- oder Nockenbahnen gesteuert werden (US 2 388 212 A), so dass sich die Winkelstellung der Zinkenträger während des Umlaufs ändert, um das Erntegut möglichst aggressiv annehmen zu können und sich am Abgabepunkt in den Innenraum der Abstreifer zurückziehen zu können, oder sie sind ungesteuert, d. h. starr mit dem Halter verbunden (EP 0 903 077 A1). Stromab der Aufsammeltrommel folgt üblicherweise eine Querförderschnecke oder ein anderer Abgabeförderer, der das Erntegut der Erntemaschine zuführt, in der es weiter verarbeitet (geschnitten) oder gesammelt oder gepresst wird.

Oberhalb der Aufsammeltrommel ist üblicherweise ein Niederhalter angeordnet, dessen Aufgabe es ist, das Schwad gegen den Erdboden zu drücken, um es vorzuverdichten, und/oder eine obere Begrenzung für das von der Aufsammeltrommel geförderte Erntegut zu bilden. Diese Niederhalter können als Walze, Bleche oder Zinkenrechen ausgeführt sein.

So zeigt die EP 1 790 206 A1 einen Schwadaufnehmer, bei dem eine vordere Niederhalterwalze vor der Aufsammeltrommel mit dem Schwad zusammenwirkt und an beiden Enden jeweils an einem Schwenkarm drehbar befestigt ist. Die Schwenkarme sind mit ihrem rückwärtigen Ende am hinteren, oberen Ende des Rahmengestells des Schwadaufnehmers um die Querachse drehbar angelenkt. Die vordere Niederhalterwalze drückt das Erntegut gegen den Erdboden und soll es vorverdichten. Sie bewegt sich gemeinsam mit den Schwenkarmen nach oben, abhängig von der Schwadhöhe. Eine hintere Niederhalterwalze ist oberhalb der Aufsammeltrommel angebracht, um eine obere Begrenzung für das von der Aufsammeltrommel zu bilden, und endseitig an Schwingen abgestützt, die koaxial zur Drehachse der vorderen Niederhalterwalze an den Schwenkarmen angelenkt sind. Die Schwinge mit der hinteren Niederhalterwalze kann um die Drehachse der vorderen Niederhalterwalze drehen und abhängig von der Schwadhöhe nach oben hin ausweichen. Um einen Mindestabstand zwischen der hinteren Niederhalterwalze und dem Hüllkreis der Zinken der Aufsammeltrommel zu erreichen, ist an den Schwenkarmen ein unterer Anschlag für die Schwingen vorgesehen. Eine ähnliche Anordnung, jedoch mit einem langgestreckten Stabgitter anstelle der hinteren Niederhalterwalze, zeigt die DE 101 20 124 A1.

Auch die EP 4 066 624 A1 zeigt einen Schwadaufnehmer mit einem Niederhalter mit einer vorderen Niederhalterwalze, die an der Vorderseite einer Schwinge befestigt ist, die an ihrem rückwärtigen Ende um die Querachse schwenkbar angelenkt ist. Um die Drehachse der vordere Niederhalterwalze ist das vordere Ende einer zweiten Schwinge angelenkt, die an ihrem rückwärtigen Ende eine hintere Niederhalterwalze trägt. Die Bewegung der zweiten Schwinge ist nach unten durch einen Anschlag begrenzt, der mit einem Gegenanschlag zusammenwirkt, der an der ersten Schwinge befestigt ist.

Diese Anordnung hat zur Folge, dass die vordere Niederhalterwalze die hintere Niederhalterwalze mit anhebt, sobald die vordere Niederhalterwalze durch das Schwad angehoben wird. Dadurch bewegt sich die hintere Niederhalterwalze - am Schwadanfang oder wenn größere Erntegutansammlungen im Schwad vorhanden sind - auch schon dann nach oben, wenn das Erntegut noch nicht bei der hinteren Niederhalterwalze angekommen ist. In diesen Fällen fehlt es dem Erntegut oberhalb der Aufsammeltrommel an einer oberen Begrenzung und es entsteht ein freier Raum, in dem das Erntegut nicht gefördert wird. Es bilden sich dann somit größere Ansammlungen von Erntegut, die zu einem Stau führen können, der durch Anhalten und Reversieren oder manuell zu beseitigen ist.

Ähnliche Anordnungen mit vorderen und rückwärtigen Niederhalterwalzen, die gemeinsam an einer Schwinge abgestützt sind, die ihrerseits gegenüber der vorderen Niederhalterhalterwalze nach vorn versetzt gegenüber dem Rahmengestell des Schwadaufnehmers angelenkt ist, zeigen die Druckschriften EP 0 401 542 A1 und DE 101 20 204 A1. Dort tritt das im vorhergehenden Absatz diskutierte Problem in ein einem noch höheren Maße auf, da sich die rückwärtige Niederhalterwalze durch die Hebelübersetzung der Schwinge noch mehr als die vordere Niederhalterwalze nach oben bewegt.

Schließlich zeigt die DE 10 2012 011 591 A1 einen Schwadaufnehmer mit einer rückwärtigen Niederhalterwalze, die an hinteren Schwingen abgestützt ist, welche koaxial zur Drehachse der Querförderschnecke am Rahmengestell des Schwadaufnehmers angelenkt sind. Die tiefstmögliche Stellung der hinteren Schwingen und somit der rückwärtigen Niederhalterwalze wird durch verstellbare Anschläge am Rahmengestell definiert, an welchen die hinteren Schwingen bei nicht vorhandenem Erntegutfluss zum Anliegen kommen. An den hinteren Schwingen sind, gegenüber der Drehachse der rückwärtigen Niederhalterwalze nach vorn und unten versetzt, vordere Schwingen um die Querachse drehbar angelenkt, die an ihrer Vorderseite eine vordere Niederhalterwalze drehbar lagern. Der Drehbereich der vorderen Schwingen gegenüber den hinteren Schwingen ist durch verstellbare Anschläge nach unten und oben begrenzt. Hier ergibt sich ebenfalls das oben diskutierte und in DE 10 2012 011 591 A1 explizit angesprochene Problem, dass durch die vordere Niederhalterwalze bei plötzlich ansteigender Schwadhöhe (wenn die vorderen Schwingen an den oberen Anschlag kommen) auch die rückwärtige Schwinge und mit ihr die rückwärtige Niederhalterwalze angehoben wird und oberhalb des Schwadaufnehmers die Begrenzung des Erntegutflusses durch die rückwärtige Niederhalterwalze fehlt, was zu Flussproblemen und Erntegutstaus führt. Zur Lösung dieses Problems soll die vordere Niederhalterwalze entlang der vorderen Schwinge verstellt werden, um sie an die jeweils aufzunehmende Erntegutmenge anzupassen. Diese Lösung erfordert jedoch jedes Mal eine Umstellung, wenn sich die Schwadhöhe ändert und ist somit nicht praktikabel.

### Problem

Das der Erfindung zu Grunde liegende Problem wird darin gesehen, einen Schwadaufnehmer mit zwei Niederhaltern und eine damit ausgerüstete Erntemaschine bereitzustellen, bei dem sich die geschilderten Probleme nicht oder in einem verminderten Maße ergeben.

### Lösung

Dieses Problem wird erfindungsgemäß durch die Lehre der Patentansprüche 1 und 8 gelöst, wobei in den weiteren Patentansprüchen Merkmale aufgeführt sind, welche die Lösung in vorteilhafter Weise weiterentwickeln.

Ein Schwadaufnehmer ist mit einem in einer Vorwärtsrichtung über ein Feld bewegbaren, tragenden Gestell ausgestattet, an dem eine Aufsammeltrommel, ein Abgabeförderer und eine erste Schwinge angebracht sind, wobei die erste Schwinge an ihrem oberen, rückwärtigen Ende um eine sich quer erstreckende Drehachse schwenkbar gelagert ist und am unteren, vorderen Ende der ersten Schwinge eine zweite Schwinge an einer Lagerung um eine quer verlaufende Achse schwenkbar an der ersten Schwinge angelenkt ist und die erste Schwinge oder die zweite Schwinge ein vorderes, unteres Niederhalterelement (insbesondere eine drehbare Niederhalterwalze, es kann sich jedoch auch um ein Blech oder einen Stabrechen o.ä. handeln) haltert und die zweite Schwinge ein hinteres, oberes Niederhalterelement (insbesondere eine drehbare Niederhalterwalze, es kann sich jedoch auch um ein Blech oder einen Stabrechen o.ä. handeln), haltert und die tiefstmögliche Position der zweiten Schwinge durch einen Anschlag begrenzt wird, der mit einem Gegenanschlag zusammenwirkt, welcher direkt am Gestell angebracht ist.

Auf diese Weise vermeidet man die eingangs erwähnten Nachteile, denn die zweite Schwinge mit dem hinteren, oberen Niederhalterelement bewegt sich aufgrund der geänderten Position des Gegenanschlags nicht zwangsläufig in einem größeren Maße nach oben, wenn die erste Schwinge durch das vordere, untere Niederhalterelement bei anwachsender Schwadhöhe angehoben wird, sondern in einem gegenüber dem Stand der Technik verminderten Maße. Dennoch kann durch die zweite Schwinge eine gewisse Kopplung zwischen beiden Niederhalterelementen erzielt werden, damit das zweite Niederhalterelement bei ansteigender Schwadhöhe schon in einem geeigneten, wenn auch geringerem Maße als bisher angehoben wird.

Der Anschlag kann dem oberen, rückwärtigen Ende der zweiten Schwinge benachbart angeordnet sein.

Der Anschlag kann von oben an dem flachen Gegenanschlag aufliegen, um eine Dreh- und Verschiebebewegung zwischen dem Anschlag und dem Gegenanschlag zu erlauben. Der Anschlag kann stabförmig sein und sich quer zur Vorwärtsrichtung erstrecken. Es sind jedoch beliebige andere Anordnungen möglich, die eine Bewegung des Anschlags relativ zum Gegenanschlags in horizontaler Richtung (nach vorn und hinten) und nach oben und unten ermöglichen.

An der ersten Schwinge kann ein weiterer Anschlag vorgesehen sein, der mit dem Anschlag zusammenwirkt, wenn die zweite Schwinge bei größere Erntegutdurchsätzen am hinteren, oberen Niederhalterelement nach vorn und oben ausgelenkt wird.

Vorzugsweise sind erste und zweite Schwingen an beiden Seiten des Gestells angeordnet und je eine zweite Schwinge ist an einer ersten Schwinge um die Drehachse drehbar angelenkt und die Niederhalterelemente bzw. Niederhalterwalzen erstrecken sich zwischen den beiden zweiten Schwingen, von denen zumindest eine (oder beide) mit dem Anschlag ausgestattet ist oder sind.

Der Schwadaufnehmer kann an beliebigen (selbstfahrenden, gezogenen oder angebauten) Erntemaschinen verwendet werden, an Feldhäckslern, Ladewagen, Ballenpresse oder Mähdreschern.

### Ausführungsform

In den Zeichnungen ist ein nachfolgend näher beschriebenes Ausführungsbeispiel der Erfindung dargestellt. Es zeigt:
- Fig. 1: eine Seitenansicht eines Feldhäckslers mit einem Schwadaufnehmer,
- Fig. 2: eine Seitenansicht des Schwadaufnehmers bei in der niedrigsten Stellung befindlichen Niederhalterwalzen,
- Fig. 3: einen vergrößerten, perspektivischen Ausschnitt aus der Figur 2,
- Fig. 4: die Ansicht nach Figur 2 jedoch bei aufgrund ansteigenden Gutflusses angehobener vorderer Niederhalterwalze, und
- Fig. 5: die Ansicht nach Figur 4, wenn der Gutfluss auch die hintere Niederhalterwalze erreicht hat.

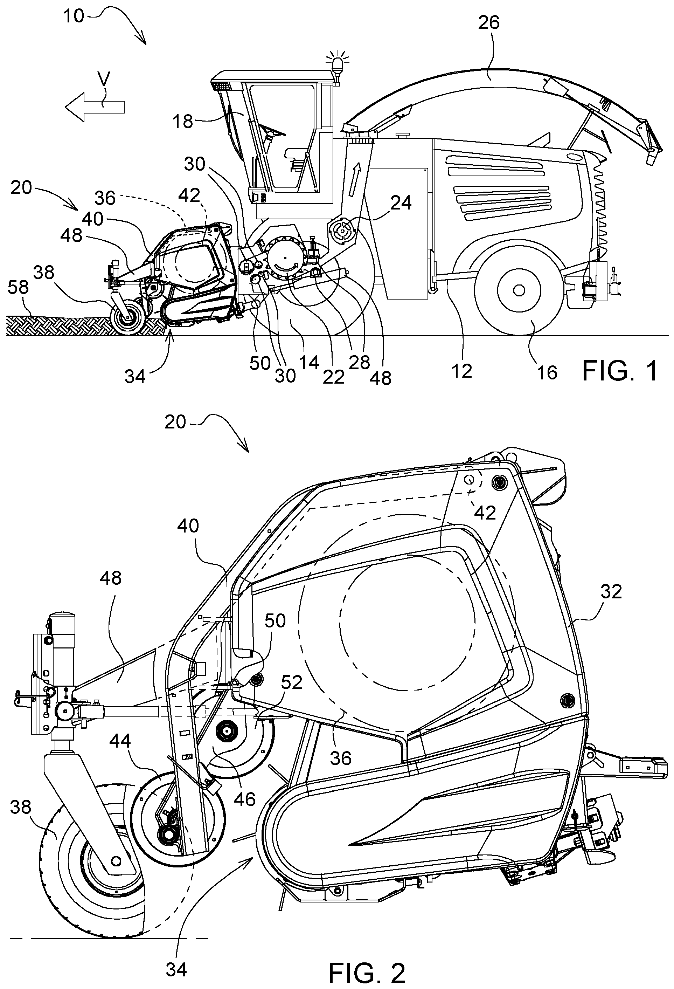

In der Figur 1 ist eine Erntemaschine in der Art eines selbstfahrenden Feldhäckslers 10 dargestellt. Der Feldhäcksler 10 baut sich auf einem Rahmen 12 auf, der von vorderen angetriebenen Rädern 14 und lenkbaren rückwärtigen Rädern 16 getragen wird. Die Bedienung des Feldhäckslers 10 erfolgt von einer Fahrerkabine 18 aus, von der aus ein Erntevorsatz in Form eines Schwadaufnehmers 20 einsehbar ist. Mittels des Schwadaufnehmers 20 vom Boden aufgenommenes Erntegut, z. B. Gras oder dergleichen, wird über einen Einzugsförderer mit Vorpresswalzen 30, die innerhalb eines Einzugsgehäuses 50 an der Frontseite des Feldhäckslers 10 angeordnet sind, einer Häckseltrommel 22 zugeführt, die es in kleine Stücke häckselt und es einem Auswurfbeschleuniger 24 aufgibt. Das Gut verlässt den Feldhäcksler 10 zu einem nebenher fahrenden Anhänger über einen um eine etwa vertikale Achse drehbaren und in der Neigung verstellbaren Auswurfkrümmer 26. Zwischen der Häckseltrommel 22 und der Fördervorrichtung 24 erstreckt sich eine Nachzerkleinerungsvorrichtung 28 mit zwei Körnerprozessorwalzen, durch die das zu fördernde Gut der Fördervorrichtung 24 tangential zugeführt wird. Die Nachzerkleinerungsvorrichtung 28 wird insbesondere bei der Maisernte benötigt, um Körner anzuschlagen, und wird bei der Grasernte ausgebaut oder in eine unwirksame Offenstellung verbracht.

Der Schwadaufnehmer 20 ist als so genannte Pick-Up ausgebildet. Der Schwadaufnehmer 20 baut sich auf einem Gestell 32 auf und stützt sich (zumindest teilweise) über beidseitig angebrachte Stützräder 38, die über je einen Träger 46 am Gestell 32 befestigt sind, auf dem Erdboden ab. Die Aufgabe des Schwadaufnehmers 20 besteht darin, auf dem Boden eines Felds verstreut oder in einem Schwad 58 abgelegtes Erntegut aufzunehmen und es der Erntemaschine 10 zur weiteren Bearbeitung zuzuführen. Hierzu wird der Schwadaufnehmer 20 während des Erntebetriebes mit geringem Abstand zum Erdboden über das Feld bewegt, während er zum Transport auf einer Strasse oder auf Wegen mittels eines Hydraulikzylinders 48 angehoben wird, welcher das Einzugsgehäuse 50 und den daran befestigten Schwadaufnehmer 20 um die Drehachse der Häckseltrommel 22 verschwenkt. Der Hydraulikzylinder 48 dient auch zur Einstellung der Höhe des Schwadaufnehmers 20 über dem Boden, bzw. zur Einstellung des Auflagedrucks der Stützräder 38 auf dem Erdboden.

Zum Schwadaufnehmer 20 gehört ein Abgabeförderer 36 in Form einer Förderschnecke, die das aufgenommene Gut von den Seiten des Schwadaufnehmers 20 zu einer in der Mitte gelegenen, nicht gezeigten Abgabeöffnung fördert, hinter der der Einzugsförderer mit den Vorpresswalzen 30 folgt. Der Schwadaufnehmer 20 weist auch eine (wie der Abgabeförderer 36) rotativ angetriebene Aufsammeltrommel 34 auf, die unterhalb des Abgabeförderers 36 angeordnet ist und mit ihren Zinken das Gut vom Erdboden anhebt, um es dem Abgabeförderer 36 zu übergeben. Die Aufsammeltrommel 34 kann beliebiger Ausführungsart sein, d.h. mit gesteuerten oder ungesteuerten Zinken versehen und innerhalb eines Gehäuses mit Abstreifern angeordnet sein, oder das Gehäuse kann entfallen. Eine mögliche Ausführungsform der Aufsammeltrommel 34 ist in der DE 10 2006 001 338 A1 gezeigt, deren Offenbarung durch Verweis mit in die vorliegenden Unterlagen aufgenommen wird, wobei die Abstreifer in beliebiger anderer als dort gezeigter Weise befestigt werden könnten.

Im Folgenden beziehen sich Richtungsangaben, wie seitlich, unten und oben, auf die Vorwärtsbewegungsrichtung V des Schwadaufnehmers 20, die in den Figuren nach links verläuft.

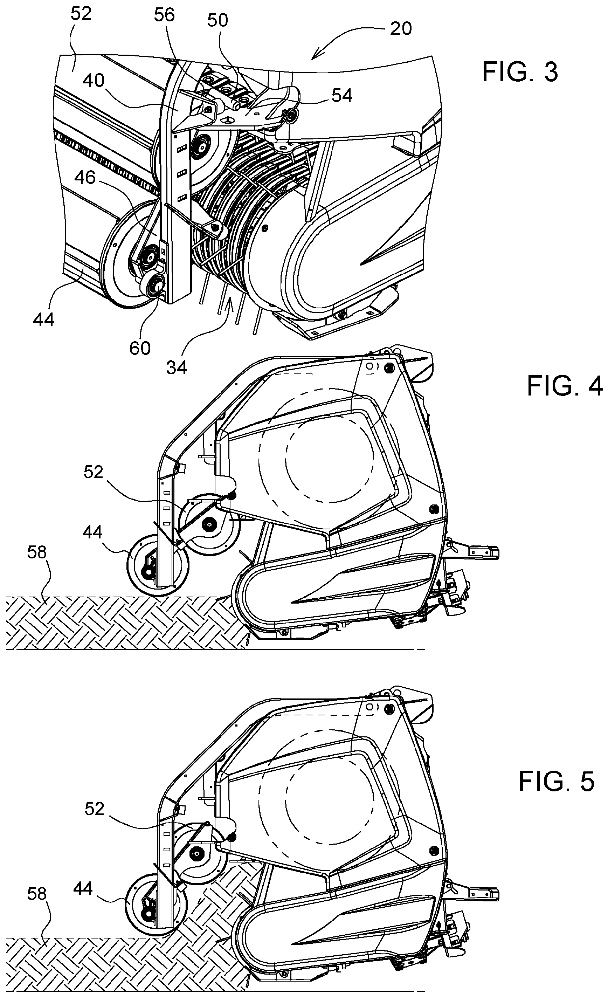

Der Schwadaufnehmer 20 umfasst eine untere, vordere Niederhalterwalze 44 und eine obere, hintere Niederhalterwalze 52. Erste Schwingen 40 erstrecken sich an beiden Seiten des Schwadaufnehmers 20 bogenförmig von ihren vorderen, unteren Enden nach oben und hinten und sind im oberen, hinteren Bereich des Schwadaufnehmers 20 an Drehachsen 42 am Gestell 32 des Schwadaufnehmers 20 um die Querachse schwenkbar abgestützt. In der Nähe der unteren Enden der ersten Schwingen 40 sind zweite Schwingen 46 durch Lagerungen 60 (vgl. auch Figur 3) angelenkt, die sich wiederum schräg nach oben und hinten erstrecken. Am rückwärtigen, oberen Ende der zweiten Schwingen 46 sind an beiden Seiten des Schwadaufnehmers 20 stabförmige, sich quer nach außen erstreckende Anschläge 50 vorgesehen, die von oben an flachen Gegenanschlägen 54 aufliegen, die ihrerseits am Gestell 32 befestigt sind. An den zweiten Schwingen 46 sind am unteren Ende die untere, vordere Niederhalterwalze 44 und im oberen Bereich die obere, hintere Niederhalterwalze 52 drehbar gelagert. Die Schwingen 40, 46 sind somit an den Drehachsen 42 bzw. den Lagerungen 60 um die Querachse drehbar gelagert, was analog für die sich in Querrichtung zwischen den zweiten Schwingen 46 erstreckenden Niederhalterwalzen 44 und 52 gilt, die an den zweiten Schwingen 46 drehbar gelagert sind.

Die Drehung der ersten Schwingen 40 nach unten ist durch verstellbare oder nichtverstellbare Anschläge (die z.B. zwischen der Vorderseite der Gegenanschläge 54 und dem benachbarten Bereich der ersten Schwingen 40 gebildet sein können, oder durch andere Bereiche oder daran befestigte Elemente der ersten Schwingen 40, die am Gestell 32 anschlagen) begrenzt, was analog für die zweiten Schwingen 46 mit ihren an den Gegenanschlägen 54 zur Anlage kommenden Anschlägen 50 gilt, sodass man bei nicht vorhandenem Erntegutfluss die Stellungen der Schwingen 40, 46 und Niederhalterwalzen 44, 52 nach Figur 2 bis 3 erhält. Die untere, vordere Niederhalterwalze 44 befindet sich somit in einer Position vor der Aufsammeltrommel 34 und oberhalb des aufzunehmenden Schwads 58, sodass sie das Schwad 58 gegenüber dem Boden vorverdichtet und/oder eine vordere Begrenzung für den von der Aufsammeltrommel 34 aufgenommenen Erntegutfluss bildet. Analog bildet die obere, hintere Niederhalterwalze 52 eine Begrenzung für den von der Aufsammeltrommel 34 aufgenommenen Erntegutfluss nach schräg vorn und oben hin, bevor er vom Abgabeförderer 36 übernommen wird.

Bei ansteigenden Höhen der Erntegutmatte im Schwad 58 wird die vordere, untere Niederhalterwalze 44 angehoben (vgl. Figur 4) und die ersten Schwingen 40 drehen um die Drehachse 42 nach oben. Diese Situation ist in der Figur 4 gezeigt. Solange der Erntegutfluss noch nicht bei der hinteren, oberen Niederhalterwalze 52 angekommen ist, drehen sich die zweiten Schwingen 46 nur geringfügig um die Lagerung 60 gegenüber den ersten Schwingen 40, während der Anschlag 50 gegenüber dem Gegenanschlag 54 rotiert und sich leicht nach vorn bewegt. Die hintere, obere Niederhalterwalze 52 bewegt sich ebenfalls nur in kleinem Maße nach vorn und oben, wie in Figur 4 gezeigt. Das ist durch die Positionierung der hinteren, oberen Niederhalterwalze 52 an der zweiten Schwinge 46 und die Positionierung des Anschlags 50 gegenüber dem Gestell 32 oberhalb und rückwärtig der hinteren, oberen Niederhalterwalze 52 bedingt, die eine Untersetzung der Bewegung der ersten Schwinge 40 gegenüber der hinteren, oberen Niederhalterwalze 52 zur Folge hat. Hierdurch vermeidet man die Erntegutflussprobleme, die sich im Stand der Technik ergeben.

Wenn der vergrößerte Erntegutfluss die hintere, obere Niederhalterwalze 52 erreicht, bewegt sich diese ebenfalls nach oben und vorn, d.h. die zweite Schwinge 46 dreht um die Drehachse 60 und der Anschlag 50 hebt vom Gegenanschlag 54 ab, wie in der Figur 5 gezeigt. Bei größeren Erntegutdurchsätzen und dadurch bedingter Bewegung der hinteren, oberen Niederhalterwalze 52 kann der Anschlag 50 an einem weiteren (in der dargestellten Ausführungsform beispielhaft durch eine mit der ersten Schwinge 40 verbundenen Konsole und einem daran angebrachten, dem Anschlag 50 zugewandten Gummipuffer gebildeten) Anschlag 56 zur Anlage kommen, der an der ersten Schwinge 40 angeordnet ist, und diese mit anheben. Dadurch wird in diesem Fall auch die untere, vordere Niederhalterwalze 44 mit nach vorn und oben bewegt.

Die Niederhalterwalzen 44 und 52 können sich frei drehen oder mit Antrieben verbunden werden, um sie mit einer zumindest etwa der Vortriebsgeschwindigkeit des Feldhäckslers 10 entsprechenden Umfangsgeschwindigkeit anzutreiben, in den Figuren im Gegenuhrzeigersinn. Die Schwingen 40, 46 können allein durch die Gewichtskraft nach unten gezogen werden, oder es können aktive oder passive Elemente vorgesehen sein, um sie nach unten oder nach oben vorzuspannen.

Bei einer anderen, nicht in den Figuren dargestellten Ausführungsform kann die untere, vordere Niederhalterwalze 44 nicht an der zweiten Schwinge 46, sondern in der Nähe des unteren vorderen Endes der ersten Schwinge 40 an der ersten Schwinge 40 gelagert sein, insbesondere koaxial mit der Drehachse der zweiten Schwinge 46. Weiterhin könnte die untere, vordere Niederhalterwalze 44 und/oder die zweite, obere Niederhalterwalze 52 durch ein anderes Niederhalterelement ersetzt oder ergänzt werden, z.B. ein flaches Blech oder einen Zinkenrechen.

## Patentansprüche

1. Schwadaufnehmer (20) mit einem in einer Vorwärtsrichtung (V) über ein Feld bewegbaren, tragenden Gestell (32), an dem eine Aufsammeltrommel (34), ein Abgabeförderer (36) und eine erste Schwinge (40) angebracht sind, wobei die erste Schwinge (40) an ihrem oberen, rückwärtigen Ende um eine sich quer erstreckende Drehachse (42) schwenkbar gelagert ist und am unteren, vorderen Ende der ersten Schwinge (40) eine zweite Schwinge (46) an einer Lagerung (60) um eine quer verlaufende Achse schwenkbar an der ersten Schwinge (40) angelenkt ist, und die zweite Schwinge (46) oder die erste Schwinge (40) ein vorderes, unteres Niederhalterelement haltert und die zweite Schwinge (46) ein hinteres, oberes Niederhalterelement haltert und die tiefstmögliche Position der zweiten Schwinge (46) durch einen Anschlag (50) begrenzt wird, der mit einem Gegenanschlag (54) zusammenwirkt, **dadurch gekennzeichnet, dass** der Gegenanschlag (54) direkt am Gestell (32) angebracht ist.

2. Schwadaufnehmer (20) nach Anspruch 1, wobei der Anschlag (50) dem oberen, rückwärtigen Ende der zweiten Schwinge (46) benachbart angeordnet ist.

3. Schwadaufnehmer (20) nach Anspruch 2, wobei der Anschlag (50) von oben an dem flachen Gegenanschlag (54) aufliegt, um eine Dreh- und Verschiebebewegung zwischen dem Anschlag (50) und dem Gegenanschlag (54) zu erlauben.

4. Schwadaufnehmer (20) nach Anspruch 3, wobei der Anschlag (50) stabförmig ist und sich quer erstreckt.

5. Schwadaufnehmer (20) nach Anspruch 3 oder 4, wobei an der ersten Schwinge (40) ein weiterer Anschlag (56) vorgesehen ist, der mit dem Anschlag (50) zusammenwirkt, wenn die zweite Schwinge (46) bei größeren Erntegutdurchsätzen am hinteren, oberen Niederhalterelement nach vorn und oben ausgelenkt wird.

6. Schwadaufnehmer (20) nach einem der Ansprüche 1 bis 5, wobei erste und zweite Schwingen (40, 46) an beiden Seiten des Gestells (32) angeordnet sind und je eine zweite Schwinge (46) an einer ersten Schwinge (40) um die quer verlaufende Achse angelenkt ist und die Niederhalterwalzen (44, 52) sich zwischen den beiden zweiten Schwingen (46) erstrecken, von denen zumindest eine mit dem Anschlag (50) ausgestattet ist.

7. Schwadaufnehmer (20) nach einem der Ansprüche 1 bis 6, wobei das erste Niederhalterelement eine drehbare Niederhalterwalze (44) oder ein flaches Blech oder ein Zinkenrechen ist und/oder das zweite Niederhalterelement eine drehbare Niederhalterwalze (52) oder ein flaches Blech oder ein Zinkenrechen ist.

8. Erntemaschine, insbesondere Feldhäcksler (10), Ladewagen, Ballenpresse oder Mähdrescher mit einem Schwadaufnehmer (20) nach einem der vorhergehenden Ansprüche.

## Claims

1. Windrow picker (20) with a supporting frame (32) movable in a forward direction (V) across a field, said frame having mounted thereon a pick-up drum (34), an output conveyor (36) and a first rocker (40), wherein the first rocker (40) is mounted at its upper, rearward end so as to be pivotable about a transversely extending axis of rotation (42), and a second rocker (46) is mounted on the first rocker (40) at the lower, front end of the first rocker (40) at a mounting (60) so as to be pivotable about a transversely extending axis, and the second rocker (46) or the first rocker (40) supports a front, lower hold-down element and the second rocker (46) supports a rear, upper hold-down element, and the lowest possible position of the second rocker (46) is limited by a stop (50) which cooperates with a counter stop (54), **characterized in that** the counter stop (54) is attached directly to the frame (32).

2. Windrow picker (20) according to Claim 1, wherein the stop (50) is arranged adjacently to the upper, rearward end of the second rocker (46).

3. Windrow picker (20) according to Claim 2, wherein the stop (50) rests on the flat counter stop (54) from above to allow rotational and sliding movement between the stop (50) and the counter stop (54).

4. Windrow picker (20) according to Claim 3, wherein the stop (50) is rod-shaped and extends transversely.

5. Windrow picker (20) according to Claim 3 or 4, wherein a further stop (56) is provided on the first rocker (40) and interacts with the stop (50) when the second rocker (46) is deflected forwards and upwards with larger crop throughputs at the rear, upper hold-down element.

6. Windrow picker (20) according to one of Claims 1 to 5, wherein first and second rockers (40, 46) are arranged on both sides of the frame (32) and a second rocker (46) is hinged to each first rocker (40) about the transversely extending axis and the hold-down rollers (44, 52) extend between the two second rockers (46), at least one of which is equipped with the stop (50).

7. Windrow picker (20) according to one of Claims 1 to 6, wherein the first hold-down element is a rotatable hold-down roller (44) or a flat plate or a tine rake and/or the second hold-down element is a rotatable hold-down roller (52) or a flat plate or a tine rake.

8. Harvesting machine, in particular a forage harvester (10), loader wagon, baler or combine harvester, with a windrow picker (20) according to one of the preceding claims.

## Revendications

1. Ramasseur d'andains (20) comprenant un châssis porteur (32) pouvant être déplacé dans une direction d'avancement (V) sur un champ, sur lequel sont montés un tambour de ramassage (34), un convoyeur de décharge (36) et un premier bras oscillant (40), le premier bras oscillant (40) étant monté pivotant, à son extrémité supérieure arrière, autour d'un axe de rotation (42) s'étendant transversalement, et, à l'extrémité inférieure avant du premier bras oscillant (40), un deuxième bras oscillant (46) étant articulé de manière pivotante au premier bras oscillant (40), au niveau d'un palier (60), autour d'un axe s'étendant transversalement, et le deuxième bras oscillant (46) ou le premier bras oscillant (40) supportant un élément de retenue avant inférieur et le deuxième bras oscillant (46) supportant un élément de retenue arrière supérieur, et la position la plus basse possible du deuxième bras oscillant (46) étant limitée par une butée (50) qui coopère avec une contre-butée (54), **caractérisé en ce que** la contre-butée (54) est montée directement sur le châssis (32).

2. Ramasseur d'andains (20) selon la revendication 1, la butée (50) étant disposée à proximité de l'extrémité supérieure arrière du deuxième bras oscillant (46).

3. Ramasseur d'andains (20) selon la revendication 2, la butée (50) reposant par le dessus sur la contre-butée (54) plate, afin de permettre un mouvement de rotation et de déplacement entre la butée (50) et la contre-butée (54).

4. Ramasseur d'andains (20) selon la revendication 3, la butée (50) étant en forme de tige et s'étendant transversalement.

5. Ramasseur d'andains (20) selon la revendication 3 ou 4, un autre butée (56) étant prévue sur le premier bras oscillant (40), laquelle coopère avec la butée (50) lorsque le deuxième bras oscillant (46) est dévié vers l'avant et vers le haut, au niveau de l'élément de retenue arrière supérieur, en présence de débits de récolte plus élevés.

6. Ramasseur d'andains (20) selon l'une des revendications 1 à 5, les premier et deuxième bras oscillants (40, 46) étant disposés des deux côtés du châssis (32), un deuxième bras oscillant (46) étant articulé sur un premier bras oscillant (40), de chaque côté, autour de l'axe s'étendant transversalement, et les rouleaux de retenue (44, 52) s'étendant entre les deux deuxièmes bras oscillants (46), dont au moins un est équipé de la butée (50).

7. Ramasseur d'andains (20) selon l'une des revendications 1 à 6, le premier élément de retenue étant un rouleau de retenue rotatif (44), une tôle plate ou un peigne à dents, et/ou le deuxième élément de retenue étant un rouleau de retenue rotatif (52), une tôle plate ou un peigne à dents.

8. Machine de récolte, notamment ensileuse automotrice (10), autochargeuse, presse à balles ou moissonneuse-batteuse, comprenant un ramasseur d'andains (20) selon l'une des revendications précédentes.
